# EUROPÄISCHE PATENTSCHRIFT

(11) **EP 0 630 460 B1**
(45) Veröffentlichungstag und Bekanntmachung des Hinweises auf die Patenterteilung: **10.01.1996**
(21) Anmeldenummer: 93905288.2
(22) Anmeldetag: 03.03.1993
(51) Int. Cl.: F16M 5/00

(54) **GRUNDGESTELL FÜR MASCHINEN UND DERGLEICHEN**
BASIC FRAME FOR MACHINES AND THE LIKE
CHASSIS DE BASE POUR MACHINES ET AUTRES

(30) Priorität: 09.03.1992 DE 9203100 U
(43) Veröffentlichungstag der Anmeldung: 28.12.1994
(73) Patentinhaber: BÖWE SYSTEC AG, D-86161 Augsburg (DE)
(72) Erfinder: GLEICH, Werner, D-8901 Leitershofen (DE)
(74) Vertreter: Ernicke, Hans-Dieter, Dipl.-Ing.
(86) Internationale Anmeldenummer: EP9300480
(87) Internationale Veröffentlichungsnummer: WO9318336

(56) Entgegenhaltungen:
- CH-A- 665 702
- DE-A- 2 165 203
- DE-U- 9 106 380
- FR-A- 2 304 020

## Beschreibung

Die Erfindung bezieht sich auf ein Grundgestell für Maschinen, Geräte, Gerüste und dergleichen, bei dem Pfosten und Holme aus Leichtmetall-Strangpreßprofilen zu einem dreidimensionalen Rahmenwerk zusammengesetzt und mit Wandelementen verbunden sind, wobei die nach oben gekehrten Pfosten-Stirnflächen durch Abdeckprofile, beispielsweise aus Kunststoff, abgeschlossen sind.

Derartige Grundgestelle und Leichtmetall-Strangpreßprofile sind durch den Gesamtkatalog "MB system", Ausgabe 1989, der ITEM GmbH, Solingen, bekannt geworden. Die Strangpreßprofile weisen einen quadratischen Grundriß auf und besitzen an ihren Seitenflächen hinterschnitten ausgebildete Nuten, die zum Einführen von Befestigungsmitteln bestimmt sind. Im Kernbereich besitzt das vorbekannte Profil einen durchgehenden zylindrischen Kanal, der zum stirnseitigen Einschrauben von Befestigungsmitteln bestimmt ist.

Derartige Leichtmetall-Strangpreßprofile lassen sich zu einem dreidimensionalen Rahmenwerk zusammensetzen, wobei das Problem darin besteht, wie man die zwischen den Pfosten und Holmen verbleibenden Freiräume abdecken kann. Hierzu sind Wandelemente entwickelt worden, die an ihren Rändern passend ausgebildete Verbindungselemente besitzen, um in die längs durchlaufenden Nuten der Pfosten bzw. Holme eingesetzt zu werden. Die Folge davon ist die Anordnung der Wandelemente in dem von den Pfosten und Rahmen umschriebenen Raum. Damit ist aber die Montage und Demontage solcher Wandelemente kompliziert geworden, weil man diese mit ihren Verbindungselementen nur längs der Nuten der Pfosten bzw. Holme verschieben kann, was bei einem fertigen Rahmenwerk ohne Demontage nicht ohne weiteres möglich ist. Infolgedessen muß man, um diese Demontage zu vermeiden, die Wandelemente von ihren Verbindungsmitteln lösen, um sie senkrecht vom Rahmenwerk abheben zu können. Diese Maßnahme ist ebenfalls unpraktisch und besonders dann umständlich, wenn mit dem Rahmenwerk das Grundgestell für Maschinen und Geräte gebildet werden soll, bei dem eine wiederholte Entfernung der Wandelemente während der Montage häufig unerläßlich ist.

Der Erfindung liegt daher die Aufgabe zugrunde, die Ausbildung und Anordnung von Wandelementen für ein derartiges Rahmenwerk derart zu vereinfachen, daß die Montage und Demontage erleichert und der optische Gesamteindruck verbessert wird.

Ausgehend vom eingangs erwähnten Stand der Technik besteht das Wesen der Erfindung darin, daß das einzelne Wandelement eine dem Abstand von Pfostenmitte zu Pfostenmitte entsprechende Breite besitzt, mit Hilfe von distanzbildenden Gliedern an den Außenflächen der Pfosten anliegt und mit einem abgewinkelten oberen Steg einen Teilbereich der oberen Pfosten-Stirnfläche übergreift, wobei das Abdeckprofil in diesem Teilbereich ausgespart ist.

Das erfindungsgemäße Wandelement läßt sich somit von außen her an die Pfosten und Holme des Rahmenwerkes ansetzen, wobei eine Lagezentrierung in zwei Richtungen dadurch gegeben ist, daß das einzelne Wandelement an der Außenseite der Pfosten und Holme anliegt und sich auf der oberen Stirnfläche der Pfosten und des oberen Holmes abstützt. Ein seitliches Verschieben des Wandelementes kann dadurch vermieden werden, daß die Randkanten des abgewinkelten oberen Steges an den Aussparungen des Abdeckprofiles geführt ist. Selbstverständlich sind auch anders gestaltete Zentrierungen anwendbar.

Die Befestigung des so montierten Wandelementes läßt sich auf herkömmliche Art bewirken. So ist es beispielsweise möglich, am unteren Rand des Wandelementes Zentrierzapfen anzuordnen, die in entsprechende Zentrierbohrungen des Rahmenwerkes beim Ansetzen des Wandelementes eingreifen. Am oberen Rand des Wandelementes können dann Riegel oder dergleichen Verbindungselemente vorgesehen werden, die sich leicht schließen und öffnen lassen.

Der Vorteil der erfindungsgemäßen Ausbildung besteht damit darin, daß die Montage und Demontage des Wandelementes auf einfachste Weise ohne Demontage des Rahmenwerkes durchgeführt werden kann. Außerdem ergibt sich ein optischer Gewinn im Gesamteindruck des Grundgestelles, weil die Wandelemente erhaben über die Pfosten des Rahmenwerkes vorstehen und nur einen schmalen Bereich der Pfosten sichtbar werden lassen, wohingegen alle anderen Flächen des Rahmenwerkes überdeckt sind. Durch unterschiedliche Farbgestaltung des Rahmenwerkes und der Wandelemente läßt sich ein besonderer ästhetischer Gesamteindruck erzielen, der die Voraussetzung für besondere Ausstattungen mit sich bringt.

Einzelheiten der Erfindung ergeben sich aus den Unteransprüchen und den Ausführungsbeispielen.

Durch die Merkmale des Anspruches 2 wird erreicht, daß die erfindungsgemäß ausgebildeten Wandelemente eine konstante Grundform besitzen, welche es ermöglicht, solche Wandelemente auch an Eckpfosten des Rahmenwerkes ohne spezielle Formänderung anzuschließen. Lediglich die Abdeckprofile der Pfosten weisen eine angepaßte Form entsprechend der Abschrägung des Randes des abgewinkelten oberen Steges der Wandelemente auf. Hierbei empfiehlt es sich, die Gestaltung nach Anspruch 3 vorzusehen. Wie die Ausführungsbeispiele zeigen, ist es aber auch denkbar, besonders im Eckenbereich des Rahmenwerkes andere Ausbildungen der Abdeckprofile vorzusehen.

Gemäß Anspruch 4 erweist es sich als zweckmäßig, wenn die Oberflächen des abgewinkelten Steges sowie der Abdeckprofile zueinander bündig sind. Dies bedingt, daß die Wandstärke des Wandelementes geringer als die Wandstärke der die Stirnfläche des Pfostens abdeckenden Platte des Abdeckprofiles ist. Dadurch wird die Möglichkeit eröffnet, eine der Wanddicke des Wandelementes entsprechende Vertiefung in der Oberfläche des Abdeckprofiles vorzusehen.

Mit den Merkmalen der Ansprüche 5 und 6 wird erreicht, daß die Zentrierung des einzelnen Wandelementes an den Pfosten und Holmen des Rahmenwerkes zusätzlich vereinfacht wird. Die Merkmale der Ansprüche 7 und 8 weisen den Vorteil auf, daß der Abstand, den die Außenfläche des Wandelementes von der Außenfläche des Rahmenwerkes besitzt, durch die Dimension der distanzbildenden Glieder bestimmt wird, die außerdem dafür sorgen, daß eine genügende Abdichtung und Anlage des einzelnen Wandelementes am Rahmenwerk sowie eine Schallisolierung herbeigeführt wird.

Diese und weitere Merkmale der Erfindung ergeben sich aus der Zeichnung. In ihr ist die Erfindung schematisch und beispielhaft dargestellt. Es zeigt:
- Fig. 1:: eine Draufsicht auf eine Ecke eines Rahmenwerkes,
- Fig. 2:: eine Teildraufsicht auf ein Wandelement,
- Fig. 3:: einen Schnitt nach der Linie III-III durch das Rahmenwerk gemäß Fig. 1.
- Fig. 4:: einen Schnitt nach der Linie IV-IV durch das Rahmenwerk gemäß Fig. 1 und
- Fig. 5 - 10:: Draufsichten auf verschiedene Ausführungsformen der Verbindung von Wandelementen und Pfosten.

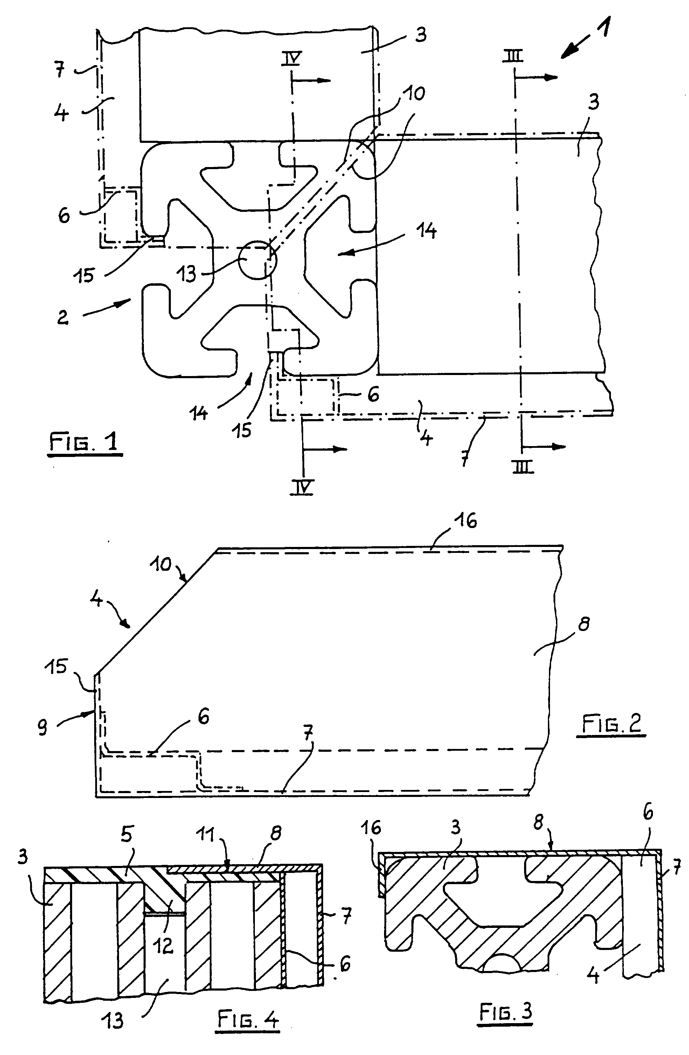

Im Ausführungsbeispiel der Fig. 1 ist symbolisch ein Grundgestell (1) in seiner Eckengestaltung dargestellt. Das Grundgestell (1) wird - wie bekannt - aus Pfosten (2) und Holmen (3) zusammengesetzt, die aus Leichtmetall-Strangpreßprofilen bestehen und einen Grundquerschnitt besitzen, wie dies beim Pfosten (2) dargestellt ist.

Die Pfosten (2) und Holme (3) weisen hinterschnitten ausgebildete Nuten (14) auf, die zur Aufnahme geeigneter Verbindungsmittel bestimmt sind. Diese Nuten (14) sind durchlaufend angeordnet, so daß die Lage, wo ein Holm (3) am Pfosten (2) angesetzt werden kann, beliebig bestimmt werden kann. Außerdem weist der Querschnitt des Pfostens (2) bzw. Holmes (3) im Zentrum einen durchlaufenden, zylinderförmigen Kanal (13) auf, der zur Aufnahme selbstschneidender Schrauben geeignet ist. Die Querschnittsgestaltung der Pfosten (2) bzw. Holme (3) kann in mannigfacher Weise abgewandelt werden.

Die mit diesen Pfosten (2) und Holmen (3) verbindbaren Wandelemente (4) sind in der Fig. 1 nur strichpunktiert dargestellt. Es soll hierbei gezeigt werden, daß das einzelne Wandelement (4) an seiner Innenseite distanzbildende Glieder (6) aufweist, die umlaufend angeordent sind und dafür Sorge tragen, daß die Außenwand (7) des einzelnen Wandelementes (4) erhaben über die Außenfläche des Pfostens (2) bzw. Holmes (3) vorstehen.

Man kann beispielsweise einen umlaufenden hohlen Rahmen (6) aus Metallblech bilden und diesen mit der Außenwand (7) des Wandelementes fest verbinden, z.B. verschweißen. Es ist aber ebenso möglich, die distanzbildenden Glieder (6) als Dichtungselemente aus elastischem Material zu bilden, was den Vorzug der Schallisolierung mit sich bringt.

Wie im besonderen die Fig. 2 bis 4 zeigen, weist das einzelne Wandelement (4) an seinem oberen Rand einen abgewinkelten Steg (8) auf, der die nach oben gekehrte Fläche des Holmes (3) gänzlich und die obere Stirnfläche des Pfostens (2) teilweise überdeckt. Der senkrecht zur Außenwand (7) sich erstreckende Rand (9) des abgewinkelten oberen Steges (8) ragt, wie die strichpunktierte Linie in Fig. 1 zeigt, etwa bis zur Mitte des Pfostens (2) und geht dann in einen abgeschrägten Rand (10) über, der in Richtung zur benachbarten Ecke des Pfostens (2) führt. Wenn somit im Bereiche eines eine Ecke bildenden Pfostens (2) gemäß Fig. 1 zwei Wandelemente (4) angesetzt werden, verlaufen bei diesem Ausführungsbeispiel die abgeschrägten Ränder (10) zueinander parallel.

Die Stirnfläche des Pfostens (2) ist von einem in Fig. 4 im Schnitt dargestellten Abdeckprofil (5) abgedeckt, daß an denjenigen Stellen Aussparungen (11) besitzt, an denen der abgewinkelte obere Steg (8) des Wandelementes (4) aufliegt.

Diese Aussparung (11) ist, wie Fig. 4 zeigt, so tief ausgebildet, daß die Oberflächen des Steges (8) und des Abdeckprofils (5) zueinander bündig verlaufen. Diese Abdeckprofile (5) besitzen die gleiche Grundfläche wie der Pfosten (2). Sie sind außerdem durch einen Zapfen (12), der in den Kanal (13) eingreift, zentriert und durch Klemmung befestigt.

Die Breite der Wandelemente (4) ist so bemessen, daß ihre Ränder (9) jeweils bis etwa zur Mitte der Pfosten (2) reichen. Man kann daher die Ränder (9) durch Randstege (15) bilden, welche zentrierend in die Nuten (14) der Pfosten (2) eingreifen und damit das seitliche Verschieben der angesetzten Wandelemente (4) vermeiden. Diese Randstege (15) können ebenfalls als Dichtungs- bzw. Schallisolierungs-Elemente ausgebildet sein.

Im übrigen ist es möglich, die abgewinkelten oberen Stege (8) mit zusätzlichen Stegansätzen (16) zu versehen, wie dies in Fig. 3 dargestellt ist. Diese Stegansätze (16) umgreifen den Holmen (3) und bilden somit eine Sperre gegen das Ablösen des Wandelementes (4) vom Holmen (3).

Das Wandelement (4) weist an der Innenseite seiner Außenwand (7) distanzbildende Glieder (6) in Form eines umlaufenden Rahmens auf, wie dies in Fig. 2 und 4 dargestellt ist. Die Höhe dieser distanzbildenden Glieder (6) bestimmen den Abstand, den die Außenwand (7) von der Außenwand des Pfostens (2) einnimmt. Diese Glieder (6) können auch als Abdicht- oder Schallisolierungsmittel ausgebildet sein.

Wenn man die Außenfläche der Pfosten (2) in einer anderen Farbe als die Außenfläche der Abdeckprofile (5) ausführt, ergibt sich wegen der schmalen offenbleibenden Flächen der Pfosten (2) eine gitterförmige Struktur des Grundgestelles (1), welches sich in besonderer Weise zur Kennzeichnung bzw. Ausstattung eignet. Die geschmacklichen Aspekte sind Gegenstand einer separaten Geschmacksmusteranmeldung.

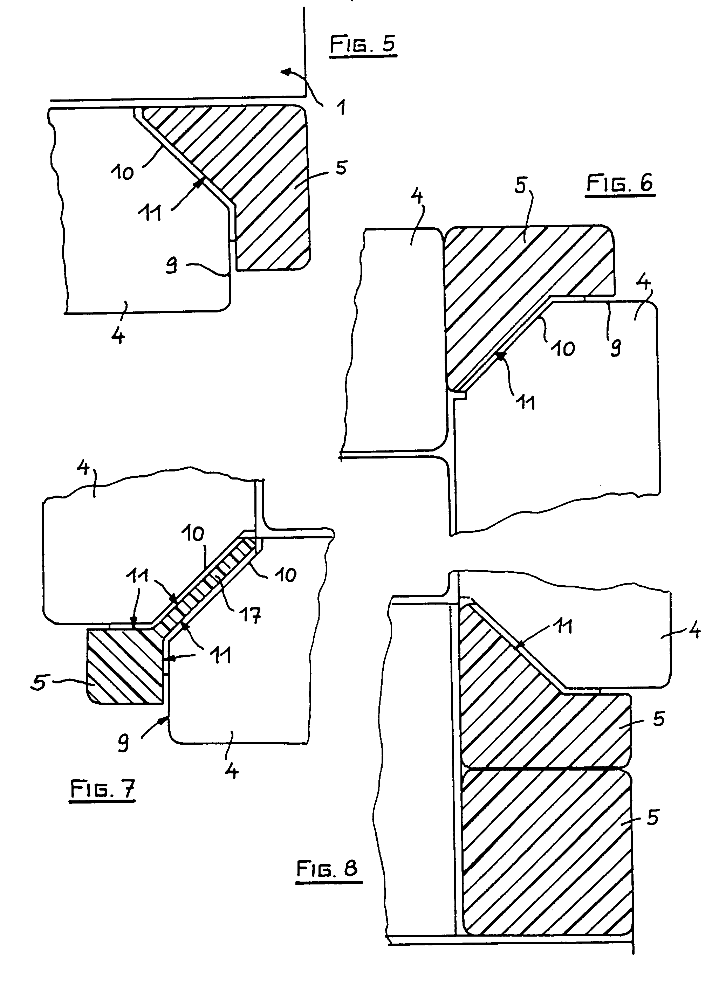

In den Fig. 5 bis 10 wird nun dargestellt, in welcher unterschiedlichen Weise die Wandelemente (4) mit den Pfosten (2) verbunden und in welcher unterschiedlichen Weise die Abdeckprofile (5) gestaltet werden können.

Im Ausführungsbeispiel der Fig. 5 wird ein Wandelement (4) gezeigt, welches den Pfosten (2) nur einseitig abdecken soll. Wie der angrenzende Teil des Grundgestells (1) ausgebildet wird, bleibt bei dieser Figur offen. Demgemäß ist das Abdeckprofil (5) nur mit einer dem Rand (9) und dem abgeschrägten Rand (10) entsprechenden Aussparung (11) versehen.

Im Beispiel der Fig. 6 sind zwei im Bereiche eines Eckpfostens (2) angeordnete Wandelemente (4) gezeigt, bei denen das Abdeckprofil (5) in gleicher Weise ausgebildet ist wie in Fig. 5.

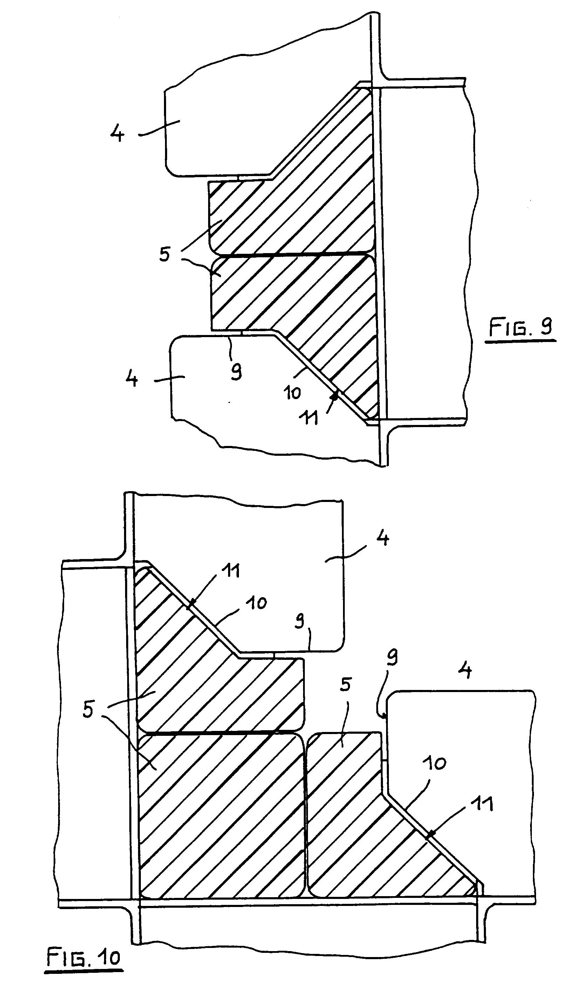

Beim Ausführungsbeispiel der Fig. 7 wird eine besonders ästhetisch wirksame Gestaltung der Eckverbindung von zwei Wandelementen (4) gezeigt, wobei das Abdeckprofil (5) jeweils eine Aussparung (11) besitzt, so daß zwischen den Wandelementen (4) ein Steg (17) verbleibt, der die schrägen Ränder (10) der Wandelemente (4) optisch voneinander trennt.

Man kann nun gemäß Fig. 8 auch eine größere Distanz zwischen zwei über Eck gestellte Wandelemente (4) herbeiführen, indem zwei Pfosten (2) nebeneinander angeordnet sind. Der eine Pfosten weist dabei eine Abdeckung gemäß Fig. 6 auf, wohingegen der andere Pfosten vom Wandelement (4) nicht übergriffen wird. Hier besitzt das Abdeckprofil (5) keine Aussparung, sondern ist vollwandig ausgebildet, und es ist offengelassen, wie das Grundgestell (1) an dieser Seite weitergeführt wird.

Im Beispiel der Fig. 9 werden zwei Wandelemente (4) in gleicher Flucht nebeneinander angeordnet. Die Abdeckprofile (5) weisen dabei nur einen dem Rand (9) und der Abschrägung (10) des Wandelementes (4) entsprechende Aussparung auf. Das Ausführungsbeispiel der Fig. 10 zeigt einen Eckbereich eines Grundgestelles (1), bei dem drei Pfosten (2) miteinander verbunden sind. Demgemäß besitzt der mittlere Pfosten ein nicht mit Aussparungen versehenes Abdeckprofil (5), wohingegen die benachbarten Pfosten Abdeckprofile (5) entsprechend den Ausgestaltungen der Fig. 5 aufweisen. Auf diese Weise kann ein besonders markanter Knotenpunkt gebildet werden, der konstruktiv von der Gestaltung des Grundgestelles abhängig ist.

### STÜCKLISTE

1 Grundgestell
2 Pfosten
3 Holm
4 Wandelement
5 Abdeckprofil
6 distanzbildendes Glied
7 Außenwand
8 abgewinkelter oberer Steg
9 Rand
10 abgeschrägter Rand
11 Aussparung am Abdeckprofil
12 Zapfen
13 Kanal
14 Nut
15 Randsteg
16 Stegansatz
17 Steg des Abdeckprofiles

## Patentansprüche

1. Grundgestell (1) für Maschinen, Geräte, Gerüste und dergleichen, bei dem Pfosten (2) und Holme (3) aus Leichtmetall-Strangpreßprofilen zu einem dreidimensionalen Rahmenwerk zusammengesetzt und mit Wandelementen (4) verbunden sind, wobei die nach oben gekehrten Pfosten-Stirnflächen duch Abdeckprofile (5), beispielsweise aus Kunststoff, abgeschlossen sind, dadurch **gekennzeichnet**, daß das einzelne Wandelement (4) eine dem Abstand von Pfostenmitte zu Pfostenmitte entsprechende Breite besitzt, mit Hilfe von distanzbildenden Gliedern (6) an den Außenflächen der Pfosten (2) anliegt und mit einem abgewinkelten oberen Steg (8) einen Teilbereich der oberen Pfosten-Stirnfläche übergreift, wobei das Abdeckprofil (5) in diesem Teilbereich ausgespart (11) ist.

2. Grundgestell nach Anspruch 1, dadurch **gekennzeichnet**, daß der die Pfosten-Stirnfläche teilweise überdeckende Bereich des Steges (8) mit seinem senkrecht zur Wandfläche stehenden Rand (9) bis etwa zur Mitte der Pfosten-Stirnfläche und dann schräg einwärts (10) bis zur Ecke der Pfosten-Stirnfläche verläuft.

3. Grundgestell nach Anspruch 2, dadurch **gekennzeichnet**, daß bei Anordnung benachbarter Wandelemente (4) an Eckpfosten (2) deren schräg einwärts verlaufende Stegränder (10) parallel und zueinander distanziert angeordnet sind und daß ein passender schmaler Steg (17) des Abdeckprofiles (5) diese Distanz ausfüllt.

4. Grundgestell nach Anspruch 1 oder einem der folgenden, dadurch **gekennzeichnet,** daß die Oberflächen des Steges (8) sowie der Abdeckprofile (5) zueinander bündig sind.

5. Grundgestell nach Anspruch 1 oder einem der folgenden, dadurch **gekennzeichnet**, daß der Steg (8) des Wandelementes (4) den zwischen zwei Pfosten (2) befindlichen Holm (3) des Grundgestells mit einem zusätzlich abgewinkelten Stegansatz (16) umgreift.

6. Grundgestell nach Anspruch 1 oder einem der folgenden, dadurch **gekennzeichnet,** daß das Wandelement (4) mit abgekanteten seitlichen Randstegen (15) in durchlaufende Nuten (14) der Pfosten (2) eingreift.

7. Grundgestell nach Anspruch 1 oder einem der folgenden, dadurch **gekennzeichnet**, daß die distanzbildenden Glieder (6) als längs der Ränder des Wandelementes (4) innenseitig umlaufender Rahmen ausgebildet ist, der mit der Außenwand (7) des Wandelementes (4) eine körperliche Einheit bildet.

8. Grundgestell nach Anspruch 1 oder 7, dadurch **gekennzeichnet**, daß die distanzbildenden Glieder (6) als Abdichtprofile aus elastischem Material ausgebildet sind.

## Claims

1. Basic frame (1) for machines, appliances, structures and the like, in which posts (2) and spars (3) mode from light metal extrusions are assembled to form a three-dimensional framework and connected to wall elements (4), wherein the upwardly turned end faces of the posts are closed off by profiled covers (5), for example made from plastics material, characterised in that the individual wall element (4) has a width which corresponds to the distance between the centres of the posts. butts against the outer surfaces of the posts (2) with the aid of spacer elements (6) and engages with a bent upper flange (8) over a partial zone of the upper end face of the post, the profiled cover (5) being recessed (11) in this partial zone.

2. Basic frame according to Claim 1. characterised in that the area of the flange (8) partielly overlapping the end face of the post extends. with its edge (9) perpendicular to the wall surface, up to approximately the centre of the end face of the post and then diagonally inwards (10) up to the corner of the end face of the post.

3. Basic frame according to Claim 2, characterised in that when adjacent wall elements (4) are disposed on corner posts (2) their flange edges (10) extending diagonally inwards are disposed parallel and spaced from one another and that a matching narrow fillet (17) of the profiled cover (5) fills this space.

4. Basic frame according to claim 1 or one of the following claims, characterized in that the surfaces of the flange (8) and of the profiled covers (5) are flush with one another

5. Basic frame according to Claim 1 or one of the following claims, characterised in that the flange (8) of the wall element (4) engages with an additionally bent flange projection (15) around the spar (3) of the basic frame located between two posts (2).

6. Basic frame according to Claim 1 or one of the following claims, characterised in that the wall element (4) engages with chamfered lateral edge flanges (15) in continuous grooves (14) in the posts (2).

7. Basic frame according to Claim 1 or one of the following claims, characterised in that the spacer elements (6) are constructed as a frame which runs around on the inside along the edges of the wall element (4) and forms a physical unit with the outer wall (7) of the wall element (4).

8. Basic frame according to Claim 1 or 7. characterised in that the spacer elements (6) are constructed as sealing profiles made from elastic material.

## Revendications

1. Châssis de base (1) pour machines, appareils, structures et analogues, dans lequel des poteaux (2) et des longerons (3) formés de profilés extrudés en métal léger sont assemblés en une ossature tridimensionnelle et sont reliés à des éléments de paroi (4), les surfaces frontales des poteaux, qui sont tournées vers le haut, étant fermées par des profilés de recouvrement (5), par exemple en matière plastique, caractérisé par le fait que l'élément de paroi (4) possède une largeur qui correspond à la distance centre-à-centre de poteaux, s'applique au moyen d'éléments d'entretoisement (6) aux surfaces extérieures des poteaux (2) et s'accroche, par une réglette supérieure coudée (8) sur une partie de la surface frontale supérieure du poteau, le profilé de recouvrement (5) étant évidé (11) dans cette partie.

2. Châssis de base suivant la revendication 1, caractérisé par le fait que la partie, qui recouvre partiellement la surface frontale du poteau, de la réglette (8) s'étend par son bord (9), qui est perpendiculaire à la surface de la paroi, approximativement jusqu'au centre de la surface frontale du poteau, puis s'étend obliquement vers l'intérieur (10) jusqu'à l'angle de la surface frontale du poteau.

3. Châssis de base suivant la revendication 2, caractérisé par le fait que, pour des éléments de paroi (4) voisins à des poteaux d'angle (2), les bords obliques rentrants (10) des réglettes sont disposés parallèlement et à distance les uns des autres et qu'une réglette (17) étroite adaptée du profilé de recouvrement (5) comble cette distance.

4. Châssis de base suivant la revendication 1 ou l'une des suivantes, caractérisé par le fait que les surfaces de la réglette (8) ainsi que des profilés de recouvrement (5) sont à affleurement.

5. Châssis de base suivant la revendication 1 ou l'une des suivantes, caractérisé par le fait que la réglette (8) de l'élément de paroi (4) entoure le longeron (3), qui est situé entre deux poteaux (2), du châssis de base par un rebord (16) de la réglette, qui est coudé supplémentairement.

6. Châssis de base suivant la revendication 1 ou l'une des suivantes, caractérisé par le fait que l'élément de paroi (4) s'engage, par des réglettes marginales latérales biseautées, dans des rainures continues (14) du poteau (2).

7. Châssis de base suivant la revendication 1 ou l'une des suivantes, caractérisé par le fait que les éléments d'entretoisement (6) sont agencés sous la forme de cadres intérieurs faisant tout le tour, qui s'étendent le long des bords de l'élément de paroi (4) et qui forment une unité de construction avec la paroi extérieure (7) de l'élément de paroi (4).

8. Châssis de base suivant la revendication 1 ou 7, caractérisé par le fait que les éléments d'entretoisement (6) sont agencés sous la forme de profilés d'étanchéité en matériau élastique.
